# EUROPÄISCHE PATENTSCHRIFT

(11) **EP 1 441 934 B1**
(45) Veröffentlichungstag und Bekanntmachung des Hinweises auf die Patenterteilung: **27.08.2008**
(21) Anmeldenummer: 02754282.8
(22) Anmeldetag: 28.06.2002
(51) Int. Cl.: B60S 1/34

(54) **WISCHARM FÜR EINEN SCHEIBENWISCHER**
WIPER ARM FOR A WINDSCREEN WIPER
BRAS D'ESSUIE-GLACE

(30) Priorität: 25.10.2001 DE 10152841
(43) Veröffentlichungstag der Anmeldung: 04.08.2004
(73) Patentinhaber: ROBERT BOSCH GMBH, 70442 Stuttgart (DE)
(72) Erfinder: KNAUF, Richard, F-67480 Roppenheim (FR)
(86) Internationale Anmeldenummer: PCT/DE2002/002362
(87) Internationale Veröffentlichungsnummer: WO 2003/037690

(56) Entgegenhaltungen:
- EP-A- 0 788 951
- DE-A- 4 204 125

## Beschreibung

### Stand der Technik

Die Erfindung geht von einem Wischarm für einen Scheibenwischer nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange besteht. An diese ist ein Wischblatt angelenkt, das in der Regel aus einem Wischleistenträger mit einer Wischleiste aufgebaut ist.

Das Gelenkteil weist an seinem Ende, das dem Befestigungsteil zugewandt ist, eine Federkammer für eine Zugfeder auf. Die Federkammer ist zur Windschutzscheibe hin offen und hat zur Wischstange hin eine Einhängevorrichtung, z.B. eine Öse, in die ein Haltebügel der Zugfeder eingehängt ist. Das andere Ende der Zugfeder greift in einen c-förmigen Bügel, der an einer Einhängevorrichtung des Befestigungsteils eingehängt ist. Der c-förmige Bügel kann auch an der Zugfeder angeformt sein. Das Gelenkteil stützt sich über eine Nabe an einem Gelenkbolzen des Befestigungsteils ab. Das so gebildete Gelenk, auch Abklappgelenk genannt, und die Einhängevorrichtung der Zugfeder sind so zueinander angeordnet, dass die Zugfeder das Gelenkteil und die Wischstange in Richtung einer Windschutzscheibe zieht. Das Wischblatt liegt somit unter der Kraft der Zugfeder an der Windschutzscheibe an und wird durch diese in der Betriebsstellung begrenzt.

Zum Reinigen oder zur Montage des Wischblatts wird das Gelenkteil des Scheibenwischers von der Windschutzscheibe abgeklappt. Dazu wird das Gelenkteil um das Abklappgelenk geschwenkt, wobei im Bereich eines Abklappwinkels von ca. 60 bis 80° zunächst die Spannung der Zugfeder überwunden werden muss. In der Abklappstellung zieht die Feder das Gelenkteil nicht mehr zur Fahrzeugscheibe, sondern zieht eine am Gelenkteil angeformte Anlagefläche oder den c-förmigen Bügel in Abklapprichtung gegen einen Begrenzungsanschlag am Befestigungsteil. Zum Zurückklappen des Wischblatts an die Windschutzscheibe muss das Gelenkteil wieder mit einer definierten Kraft um die Gelenkachse geschwenkt werden.

Um die aerodynamischen Eigenschaften eines Fahrzeugs zu verbessern, werden die Scheibenwischer in ihrer Parkstellung zunehmend verdeckt in einer so genannten Haubenspalte zwischen der Motorhaube und der Windschutzscheibe abgelegt. Eine solche Wischeranlage ist z.B. aus der DE 38 10 017 A1 bekannt. Damit das Gelenkteil beim Abklappen mit dem üblichen Winkel an der Motorhaube nicht anschlägt und diese beschädigt, ist ein Begrenzungsanschlag vorgesehen, der ein Abklappen nur in einem kleineren Winkelbereich zuläßt, in dem die Zugfeder noch keine Kraft in Abklapprichtung erzeugt. In dieser Abklappstellung, die zwar zum Reinigen der Windschutzscheibe ausreicht, aber einen Wechsel des Wischblatts erschwert, wird das Gelenkteil mit einer Federraste gehalten, die durch die Zugfeder und eine Nocken-Schulteranordnung gebildet wird.

Manche Abklappgelenke, z.B. nach der DE 37 09 994 A1, besitzen eine mit dem Befestigungsteil fest verbundene, zum Gelenkteil hin offene Nabe, in die eine mit dem Gelenkteil fest verbundene, bolzenförmige Gelenkachse eingreift. Im eingebauten Zustand wird das Gelenkteil mit dem Wischblatt in der Betriebsstellung durch die Nabe und die Fahrzeugscheibe und in der Abklappstellung durch die Nabe und den Begrenzungsanschlag in einer stabilen Lage gehalten. Demzufolge besteht keine Gefahr, dass es zur offenen Seite der Nabe heraus gedreht wird.

Im vormontierten Zustand, beispielsweise zum Transport, besteht die Gefahr, dass durch geringe Krafteinwirkung auf den vormontierten Wischarm, z.B. durch Erschütterungen während des Transports oder unvorsichtige Handhabung, die Gelenkachse aus der Nabe heraus gleitet und das Abklappgelenk in seine einzelnen Bestandteile auseinander fällt. Dadurch werden zusätzliche Montagearbeiten notwendig und es besteht die Gefahr, dass Teile verloren gehen.

Aus der DE 42 04 125 A ist ein gattungsgemäßer Wischarm bekannt, der zum Auswechseln eines Wischblatts in eine Abklappstellung geschwenkt und dort verrastet werden kann. Dazu besitzt das Befestigungsteil des Wischarms an der dem Gelenkteil zugewandten Stirnseite eine Ausstülpung mit Rastbahnen, durch die während der Schwenkbewegung des Gelenkteils das hakenförmige Ende einer Zugfeder hinter die Ausstülpung gedrückt wird. Bei dem Überschreiten eines Scheitelpunkts der Ausstülpung erreicht die Zugfeder einen Maximalwert, wodurch das Gelenkteil nach dem Überschreiten in der Abklappstellung gehalten wird. Bei einer Ausführung ist die Einhängeachse der Zugfeder an dem Gelenkteil mit einem rohrförmigen Stück umgeben, das an seinem äußeren Umfang einen in Achsrichtung verlaufenden Wulst besitzt, der mit der Ausstülpung zusammenwirkt und eine erste Abklappstellung bewirkt. Nach Überschreiten der Wulst gleitet der Scheitelpunkt an einem zylindrischen Außenteilstück des rohrförmigen Stücks entlang, um eine andere Abklappstellung zu bewirken. Diese wird erreicht, wenn ein parallel zum Wulst verlaufender Flansch des rohrförmigen Stücks an der Ausstülpung oder einer anderen Fläche des Befestigungsteils anstößt. Beide Ausklappstellungen liegen eng beieinander, da sie zum Auswechseln des Wischblatts dienen sollen.

Aus der EP-A-0 788 951 ist ein Wischarm bekannt, bei dem das Gelenkteil an der dem Befestigungsteil zugewandten Stirnseite eine Rastvertiefung aufweist, in die in der Abklappstellung des Wischarms eine Federraste einrastet. Diese besteht aus einem zylindrischen Rohrstück, das die Einhängeachse am Befestigungsteil mit Spiel umgibt und von der Zugfeder über einen c-förmigen Bügel belastet wird. Die Federraste sichert das Gelenkteil in der Abklappstellung in beiden Richtungen. Dadurch ist es möglich, dass die Abklappstellung einen kleineren Abklappwinkel aufweist als bei Wischarmen, bei denen die Wirkungslinie der Zugfeder in der Abklappstellung eine Neutralstellung einnimmt.

### Vorteile der Erfindung

Nach der Erfindung ist die Raststellung zwischen der Betriebsstellung und der Abklappstellung so angeordnet, dass das Wischblatt in einer Parkposition in einer Haubenspalte zwischen einer Motorhaube und der Windschutzscheibe von dieser bis zur Raststellung abgehoben werden kann, ohne die Motorhaube zu berühren. Zur Montage des Wischblatts wird der Scheibenwischer aus der Parkposition in eine Montageposition gestellt, in der ohne Beschädigung der Motorhaube die Raststellung überdrückt werden kann und das Gelenkteil die Abklappstellung mit einem Abklappwinkel erreicht, in der das Wischblatt leicht zu montieren ist. In der Parkposition wird das Gelenkteil in einer Zwischenstellung fixiert, die eine Beschädigung der Motorhaube ausschließt aber gleichzeitig genügend Freiraum zum Reinigen des Wischblatts bzw. der Windschutzscheibe bietet. Vorteilhafterweise ist diese Stellung als Raststellung ausgebildet, sodass der Wischarm sicher in dieser Position gehalten wird und nicht ungewollt an der Motorhaube anschlägt oder ohne Wischblatt auf die Windschutzscheibe zurück schlägt.

Um die Raststellung des Scheibenwischers zu ermöglichen, sind vorteilhafterweise nur geringfügige Veränderungen an den üblichen Standardbauteilen notwendig. Das erfindungsgemäße Befestigungsteil weist an seinem Ende, das dem Gelenkteil zugewandt ist, eine Rastbahn mit einer Rastvertiefung auf, die zweckmäßigerweise beim Herstellen des Befestigungsteils angeformt wird. Als Veränderung gegenüber dem Standardbauteil wird am Gelenkteil eine Federraste befestigt, die in der Rastposition in die Rastvertiefung eingreift. Die Federraste ist zweckmäßigerweise in der Federkammer des Gelenkteils angeordnet und zwar seitlich versetzt zu dem c-förmigen Bügel bzw. der Zugfeder.

Die Federraste weist zweckmäßigerweise als federndes Element eine Federzunge auf, die mit einem Winkelteil an einer Seitenwange des Gelenkteils befestigt ist. Die Federzunge ist so angeordnet, dass sie beim Schwenken des Wischarms in die Raststellung die Rastbahn des Wischarms berührt und in eine Rastvertiefung eingreift. Dabei sind die Formen der Federzunge und der Rastvertiefung so aufeinander abgestimmt, dass der Wischarm in beiden Schwenkrichtungen über einen Begrenzungsnocken gedrückt werden muss, um in die Abklappstellung oder in die Betriebsstellung zu gelangen. In der Betriebsstellung berührt die Federzunge das Befestigungsteil nicht oder nur unwesentlich, so dass die Auflagekräfte des Wischblatts praktisch nicht verändert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine teilweise Ansicht eines Wischarms und Wischblatts von unten,

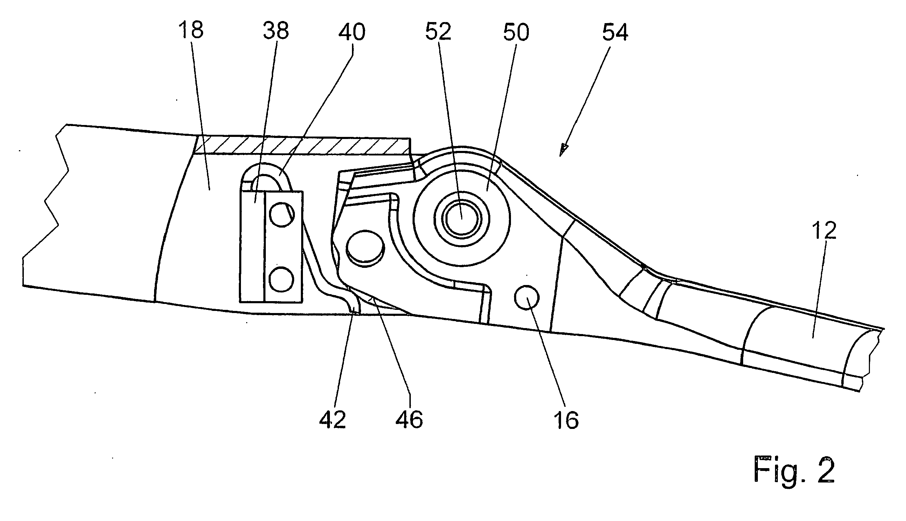

- Fig. 2: eine teilweise Seitenansicht eines Wischarms in einer Betriebsstellung mit einem Schnitt entsprechend der Linie II-II in Fig. 1,
- Fig. 3: einen Wischarm nach Fig. 2 in einer Abklappstellung,
- Fig. 4: einen Wischarm nach Fig. 2 in einer Raststellung und

### Beschreibung der Ausführungsbeispiele

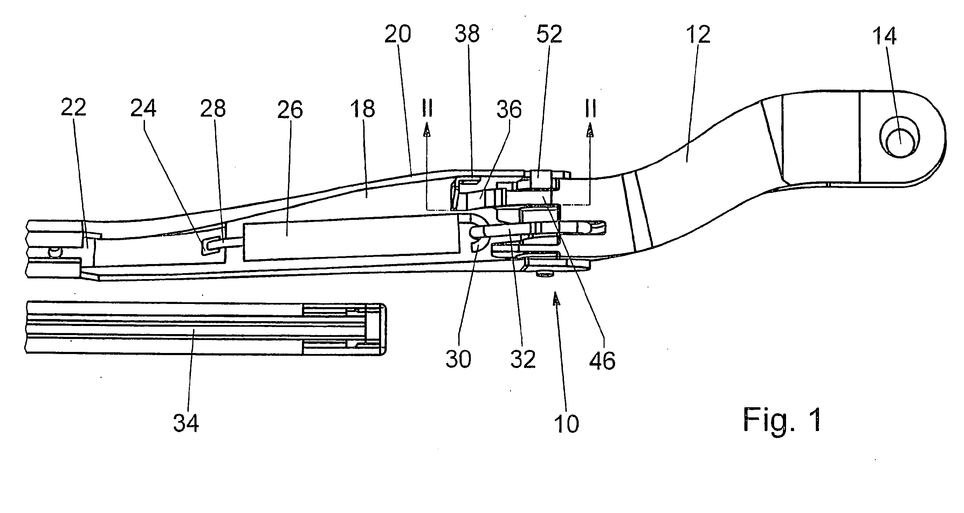

Ein Wischarm 10 umfasst ein Befestigungsteil 12 und ein Gelenkteil 18 mit einer Wischstange 22, mit der ein Wischblatt 34 gelenkig verbunden ist (Fig. 1). An einem Ende weist das Befestigungsteil 12 eine Aufnahmebohrung 14 für eine nicht dargestellte Antriebswelle des Scheibenwischers auf. Am anderen Ende ist das Befestigungsteil 12 mit dem Gelenkteil 18 durch ein Abklappgelenk 54 gelenkig verbunden. Beide Teile sind in der gezeigten Betriebsstellung durch eine Zugfeder 26 gegeneinander verspannt. Dazu ist die Zugfeder 26 an einem Ende 28 in eine Einhängevorrichtung in Form einer Einhängeöse 24 an der Wischstange 22 und am anderen Ende 30 über einen c-förmigen Bügel 32 in einer Einhängevorrichtung in Form eines Querstifts 16 am Befestigungsteil 12 eingehängt
(Fig. 2).

Im Bereich des Abklappgelenks 54 weist das Gelenkteil 18 einen u-förmigen Querschnitt auf, in dessen innerem Raum die Zugfeder 26 untergebracht ist. Neben der Zugfeder 26 bzw. dem c-förmigen Bügel 32 ist eine Federraste 36 angeordnet, die durch eine Federzunge 40 gebildet und mit einem Winkelteil 38 an einer Seitenwange 20 des Gelenkteils 18 befestigt ist. Ein als Rastende 42 geformter Teil der Federzunge 40 weist in Richtung auf eine Rastbahn 46 am Befestigungsteil 12. Damit die Auflagekraft des Wischblatts 34 auf der Windschutzscheibe nicht beeinflusst wird, ist die Federzunge 40 so gestaltet bzw. eingebaut, dass sie in der Betriebsstellung von der Rastbahn 46 abhebt.

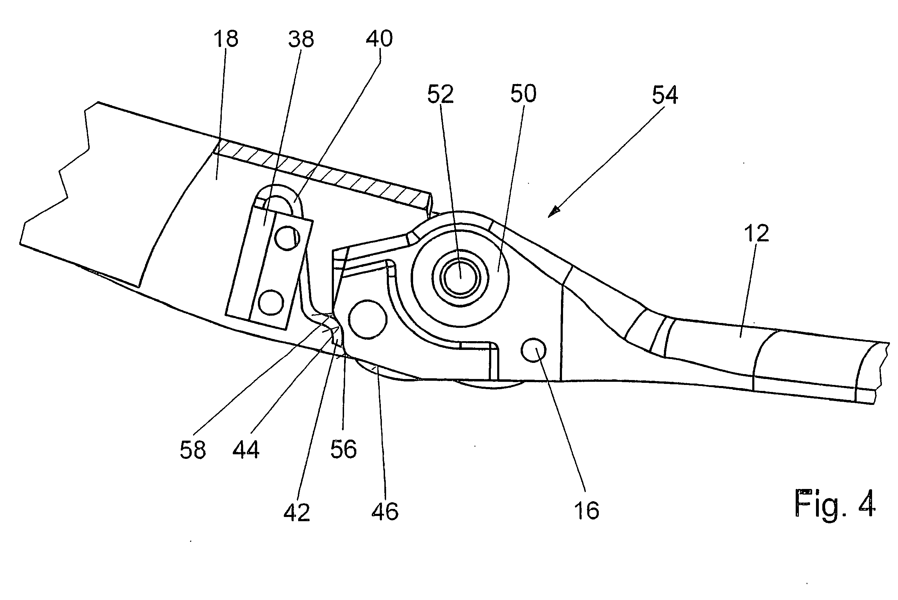

Der Wischarm 10 befindet sich in seiner Parkposition in einer so genannten Haubenspalte zwischen der Windschutzscheibe und einer nicht dargestellten Motorhaube. Fig. 4 zeigt das Abklappgelenk 54 in einer Raststellung, bis zu der das Wischblatt 34 in der Parkposition des Scheibenwischers abgehoben werden kann, ohne die Motorhaube zu berühren. Dazu wird das Gelenkteil 18 um den Gelenkbolzen 52 geschwenkt und das Rastende 42 der Federzunge 40 gleitet an der Rastbahn 46 entlang, bis es in einer Rastvertiefung 44 einrastet.

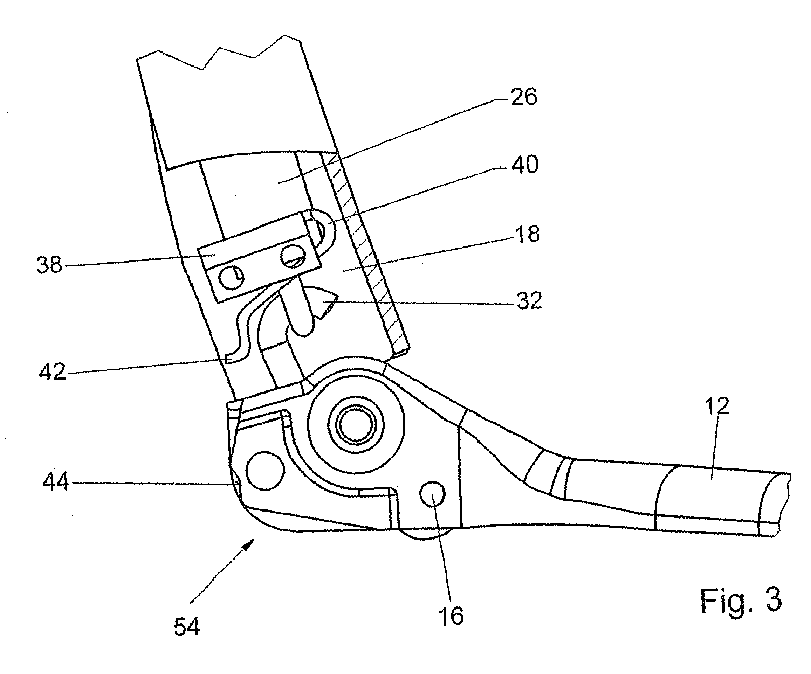

Die Rastvertiefung 44 wird von zwei Nocken 56 und 58 begrenzt. Beim Überwinden dieser beiden Nocken 56, 58 erhöht sich die Spannung der Federzunge 40, so dass das Rastende 42 der Federzunge 40 sicher in der Rastvertiefung 44 gehalten wird und der Wischarm 10 in der Raststellung fixiert ist. Das Gelenkteil 18 mit dem Wischblatt 34 ist in dieser Stellung weit genug von der Windschutzscheibe entfernt, um z.B. das Wischblatt 34 und die Windschutzscheibe zu reinigen. Zum Wechseln des Wischblatts 34 wird der Wischarm 10 aus der Parkstellung in eine Position gefahren, in der das Gelenkteil 18 weiter abgeklappt werden kann. Dabei wird der Nocken 58 überwunden und die Federzunge 40 gleitet an der Rastbahn 46 entlang bis die Abklappstellung erreicht ist (Fig. 3), in der die Zugfeder 26 auf das Gelenkteil 18 eine Kraft in Abklapprichtung erzeugt und das Gelenkteil 18 oder den c-förmigen Bügel 32 gegen einen Anschlag zieht.

## Patentansprüche

1. Wischarm (10) für einen Scheibenwischer mit einem Befestigungsteil (12) und einem Gelenkteil (18), die über ein Abklappgelenk (54) miteinander verbunden sind, wobei eine Zugfeder (26) an ihrem einen Ende (28) in einer Einhängevorrichtung (24) des Gelenkteils (18) und an ihrem anderen Ende (30) über einen c-förmigen Bügel (32) in einer Einhängevorrichtung (16) des Befestigungsteils (12) eingehängt ist und in einer Betriebsstellung ein Wischblatt (34) über eine Wischstange (22) gegen eine Windschutzscheibe und in einer Abklappstellung gegen eine Anlagefläche des Gelenkteils (18) oder des c-förmigen Bügels (32) gegen einen Begrenzungsanschlag des Befestigungsteils (12) drückt, wobei zwischen der Betriebsstellung und der Abklappstellung eine Raststellung für den Wischarm (10) vorgesehen ist, **dadurch gekennzeichnet, dass** der Scheibenwischer in einer Parkposition in einer Haubenspalte positioniert ist und die Raststellung so angeordnet ist, dass das Wischblatt (34) in der Parkposition in der Haubenspalte zwischen der Motorhaube und der Windschutzscheibe von dieser bis zur Raststellung abgehoben werden kann, ohne die Motorhaube zu berühren, wobei am Gelenkteil (18) oder am Befestigungsteil (12) eine Rastvertiefung (44) angeordnet ist, in die in der Raststellung eine Federraste (36) einrastet, die an dem jeweilig anderen Teil (12, 18) befestigt ist.

2. Wischarm (10) nach Anspruch 1, **dadurch gekennzeichnet, dass** die Federraste (36) von einer Federzunge (40) gebildet wird, die am Gelenkteil (18) befestigt ist.

3. Wischarm (10) nach Anspruch 1 oder 2, **dadurch gekennzeichnet, dass** die Federraste (36) seitlich versetzt zum c-förmigen Bügel (32) bzw. zur Zugfeder (26) angeordnet ist und von einem Winkelteil (38) gehalten wird, das an einer Seitenwange (20) des Gelenkteils (18) befestigt ist.

## Claims

1. Wiper arm (10) for a windscreen wiper, with a fastening part (12) and an articulated part (18) which are connected to each other via a fold-down joint (54), wherein a tension spring (26) is mounted at its one end (28) in a mounting device (24) on the articulated part (18) and at its other end (30) via a C-shaped bracket (32) in a mounting device (16) on the fastening part (12) and, in an operating position, presses a wiper blade (34) via a wiper rod (22) against a windscreen and, in a folded-down position, presses a bearing surface of the articulated part (18) or of the C-shaped bracket (32) against a boundary stop of the fastening part (12), and wherein a latching position for the wiper arm (10) is provided between the operating position and the folded-down position, **characterized in that**, in a parking position, the windscreen wiper is positioned in a bonnet gap and the latching position is arranged in such a manner that the wiper blade (34), in the parking position in the bonnet gap between the bonnet and the windscreen, can be lifted from the latter as far as the latching position without touching the bonnet, with a latching depression (44) being arranged on the articulated part (18) or on the fastening part (12), and a spring catch (36) which is fastened to the other part (12, 18) in each case latching into said latching depression in the latching position.

2. Wiper arm (10) according to Claim 1, **characterized in that** the spring catch (36) is formed by a spring tongue (40) which is fastened to the articulated part (18) .

3. Wiper arm (10) according to Claim 1 or 2, **characterized in that** the spring catch (36) is offset laterally with respect to the C-shaped bracket (32) and with respect to the tension spring (26) and is held by an angular part (38) which is fastened to a side cheek (20) of the articulated part (18).

## Revendications

1. Bras d'essuie-glace (10) pour un essuie-glace comportant une pièce de fixation (12) et une pièce d'articulation (18) reliées par une articulation de rabattement (54),
un ressort de traction (26) étant accroché par une extrémité (28) dans un dispositif d'accrochage (24) de la pièce articulée (18) et par son autre extrémité (30) par l'intermédiaire d'un arceau (32) en forme de C dans un dispositif d'accrochage (16) de la pièce de fixation (12), et dans la position de fonctionnement, la lame d'essuyage (34) est poussée par la tige d'essuie-glace (22) contre le pare-brise et dans la position rabattue, la lame est poussée contre une surface d'appui de la pièce d'articulation (18) ou de l'arceau 32 en forme de C, contre une butée de limitation de la pièce de fixation (12), et
entre la position de fonctionnement et la position rabattue, il y a une position d'arrêt du bras d'essuie-glace (10),
**caractérisé en ce que**
le balai d'essuie-glace est positionné dans une position de rangement dans l'intervalle du capot et la position d'arrêt est située pour que le balai d'essuie-glace (34) soit soulevé dans la position de rangement dans l'intervalle du capot entre le capot du moteur et le pare-brise par rapport au pare-brise jusqu'à la position de rangement, sans toucher le capot,
la pièce d'articulation (18) ou la pièce de fixation (12) comportent une cavité d'accrochage (44) dans laquelle un moyen d'accrochage élastique (36) s'accroche en position de repos, ce moyen étant fixé à l'autre pièce respective (12, 18).

2. Bras d'essuie-glace (10) selon la revendication 1,
**caractérisé en ce que**
le moyen d'accrochage élastique (36) est formé par une languette élastique (40) fixée à la pièce d'articulation (18).

3. Bras d'essuie-glace (10) selon la revendication 1 ou 2,
**caractérisé en ce que**
le moyen d'accrochage élastique (36) est décalé latéralement par rapport à l'arceau (32) en forme de C ou au ressort de traction (26) et est tenu par une pièce coudée (38) elle-même fixée à une joue (20) de la pièce d'articulation (18).
